# EUROPEAN PATENT APPLICATION

(11) **EP 1 191 802 A2**
(43) Date of publication of application: **27.03.2002**
(21) Application number: 01122753.5
(22) Date of filing: 21.09.2001
(51) Int. Cl.: H04Q 7/32

(54) **Weather information delivery system and method**

(30) Priority: 22.09.2000 JP 2000288937
(71) Applicant: NEC CORPORATION, Tokyo (JP)
(72) Inventor: Yamamoto, Osamu, c/oNEC Corporation, Tokyo (JP)
(74) Representative: Betten & Resch

(57) **Abstract**

A weather information delivery system and a method of the system, in which real time weather information having high accuracy can be obtained by using many samples from mobile communication terminals, are provided. Mobile communication terminals, which scatter in wide areas and are connected to the Internet, output weather condition information of spots where the mobile communication terminals are positioned as a packet mode, by detecting the weather condition information by using a built-in sensor or by pushing one of designated keys on each of the mobile communication terminals. A switching exchange makes weather information basic data as packets by receiving the weather condition information transmitted from the mobile communication terminals and also receiving the position information of the mobile communication terminals from base stations to which the mobile communication terminals are connected, and adding the time information at the time when the weather condition information was received, and transmits the packets to a channel. A weather information server makes weather information of specified areas by collecting the weather information basic data transmitted from the switching exchange through the Internet, and by editing and processing the received weather information basic data. An information delivery server receives the weather information of specified areas transmitted from the weather information server and stores it in the information delivery server, and outputs the weather information of some area corresponding to request from users.

## Description

### BACKGROUND OF THE INVENTION

The present invention relates to a weather information delivery system and a method thereof, in particular, in which weather condition information from many mobile communication terminals scattering in wide areas is collected through a network such as the Internet and edited, and the edited weather condition information is sold as weather information at a specified area.

### Description of the Related Art

Weather condition information in Japan is collected from predetermined spots by using AMeDAS being an area observing system of the Meteorological Agency of Japan. For example, a TV broadcasting station uses a TBS Weather Guide system, and in the system, in addition to a weather map, the highest temperature and the lowest temperature of areas, the newest images from the weather satellite named Himawari and the data of the day-light hours from the AMeDAS can be checked. And another TV broadcasting station uses a Weather Line system, and the system renews the images from the Himawari, the information from the AMeDAS, and various forecasts from the Meteorological Agency at real time, and the TV broadcasting station broadcasts a point of weather and its own weather forecast. In Japanese Patent Application Laid-Open No. HEI 11-250096, a weather information delivery method, in which a weather forecast corresponding to the request from a user is delivered, is disclosed.

However, at the conventional weather information delivery systems used the AMeDAS information mentioned above, the weather information is collected from the spots where the Meteorological Agency installed observing equipment beforehand. And the cost for installing equipment is high, therefore the installing density cannot be high and the observation is forced to execute in coarse density.

On the other hand, cellular phones being one of the mobile communication terminals have been used widely and users of the cellular phone are distributed in wide areas. Therefore, if a weather condition information detecting function and its reporting function are added to the cellular phone, weather condition information being fine and good quality can be collected from wide areas by using the cellular phones. And general weather information that is requested by many people is information that a person wants to know whether it is raining or not at the place where the person is going to, and the person judges whether it is necessary to take his/her umbrella with or not. Therefore, the weather information of a place where many people gather needs its accuracy and its demand is high, but the demand of the weather information of a place where a few people gather is low. The weather information transmitting from the cellular phones has high density at a place where many people gather, and when the data from the cellular phones are statistically processed, it is possible that high accurate weather information satisfying the demand can be obtained.

The weather condition information transmitting from each of the cellular phones is at most a few byte information being very small capacity, even if temperature information is added to one bit information being fair or rain. Therefore, it is possible that weather information can be collected in a low cost and in a very short time when the packet mode of such as the W-CDMA system is utilized.

### SUMMARY OF THE INVENTION

It is therefore an object of the present invention to provide a weather information delivery system and a method of the system, in which real time weather information having high accuracy can be obtained by using many samples from mobile communication terminals.

According to a first aspect of the present invention, for achieving the object mentioned above, there is provided a weather information delivery system. The weather information delivery system provides mobile communication terminals, which scatter in wide areas and are connected to the Internet, for outputting weather condition information showing the weather conditions of spots where the mobile communication terminals are positioned as a packet mode by detecting the weather condition information automatically with a sensor or by inputting the weather condition information on one of designated keys of each of the mobile communication terminals, mobile switching exchanges (or routers), which are connected to the mobile communication terminals through base stations, for outputting weather information basic data by receiving the weather condition information transmitted from the mobile communication terminals and position information of the mobile communication terminals from the base stations to which the mobile communication terminals are connected, and by adding time information at the time when the weather condition information was received, and a weather information server for receiving the weather information basic data transmitted from the mobile switching exchanges (or routers) through the Internet, and for making weather information of specified areas by editing and processing the received weather information basic data. And further the weather information delivery system provides an information delivery server for outputting weather information of some specified areas corresponding to requests from users, by receiving the weather information of specified areas from the weather information server and storing it.

According to a second aspect of the present invention, a weather information delivery system provides mobile communication terminals, which scatter in wide areas and are connected to the Internet, for outputting weather condition information showing the weather conditions of spots where the mobile communication terminals are positioned by detecting the weather condition information automatically with a sensor or by inputting the weather condition information on one of designated keys of each of the mobile communication terminals, with position information of the mobile communication terminals by obtaining from a GPS receiver built-in each of the mobile communication terminals as a packet mode, mobile switching exchanges (or routers), which are connected to the mobile communication terminals through base stations, for outputting weather information basic data by receiving the weather condition information with the position information transmitted from the mobile communication terminals and by adding time information at the time when the weather condition information was received, and a weather information server for receiving the weather information basic data transmitted from the mobile switching exchanges (or routers) through the Internet, and for making weather information of specified areas by editing and processing the received weather information basic data. And further the weather information delivery system provides an information delivery server for outputting weather information of some specified areas corresponding to requests from users, by receiving the weather information of specified areas from the weather information server and storing it.

According to a third aspect of the present invention, in the first and second aspect, each of the mobile communication terminals outputs the weather condition information by detecting the weather condition information by using a rain/fair sensor combined a temperature sensor and a humidity sensor, or by pushing one of designated keys allocated to rain and fair information. And the rain/fair sensor is built in or attached to each of the mobile communication terminals. And further the weather condition information can be inputted by pushing one of designated keys allocated to rain, fair, cloud, and snow information at each of the mobile communication terminals, or in this, the snow information is included in the rain information instead of using an independent key for the snow information.

According to a fourth aspect of the present invention, in the first aspect, each of the mobile switching exchanges (or routers) provides a packet transmitting/receiving controller that receives the weather condition information transmitted from the mobile communication terminals through the base stations and also receives the position information of the mobile communication terminals from the base stations, and adds the time information at the received time of the weather condition information, and makes the weather information basic data by using the received weather condition information, the position information, and the time information, and makes packets from the weather information basic data, and transmits the packets to a channel, a weather condition information distinguishing controller that distinguishes the weather condition information received at the packet transmitting/receiving controller, and also controls to store the weather condition information and to process charging operation, a weather information storage that stores the weather condition information distinguished at the weather information distinguishing controller every transmitted mobile communication terminal number, and a charging processor that calculates the amount of money reducing from the charging amount for each of the mobile communication terminals by accumulating the number of times that each of the mobile communication terminals transmitted the weather condition information based on the information storing in the weather information storage, by the instruction from the weather information distinguishing controller, that is, the charging processor calculates the amount of commission that should be paid to each of the mobile communication terminals corresponding to the transmitting times of the weather condition information. And the weather information server provides a weather information receiver that receives the weather information basic data transmitted from the mobile switching exchanges (or routers) through the Internet, a weather information editing processor that makes weather information of specified areas by editing and processing the weather information basic data received from the weather information receiver, a database that stores the weather information edited and processed at the weather information editing processor, a weather information outputting controller that controls to extract some weather information from the database and to output the extracted weather information, and a weather information transmitter that transmits the extracted weather information based on an instruction from the weather information outputting controller. And the information delivery server provides a weather information receiver that receives weather information from the weather information server through the Internet, weather information storage that stores the weather information received at the weather information receiver, a request receiving section that receives weather information outputting requests from users, a weather information outputting controller that controls to extract some weather information from the weather information storage based on the requests from the users, and to output requested weather information, and a weather information transmitter that transmits the requested weather information to the users.

According to a fifth aspect of the present invention, in the second aspect, each of the mobile switching exchanges (or routers) provides a packet transmitting/receiving controller that receives the weather condition information and the position information obtained from the built-in the GPS receiver in each of the mobile communication terminals transmitted from each of the mobile communication terminals and adds the time information at the received time of the weather condition information, and makes the weather information basic data by using the received weather condition information, the position information, and the added time information, and makes packets from the weather information basic data, and transmits the packets to a channel, a weather condition information distinguishing controller that distinguishes the weather condition information received at the packet transmitting/receiving controller, and also controls to store the weather condition information and to process charging operation, a weather information storage that stores the weather condition information distinguished at the weather information distinguishing controller every transmitted mobile communication terminal number, and a charging processor that calculates the amount of money reducing from the charging amount for each of the mobile communication terminals by accumulating the number of times that each of the mobile communication terminals transmitted the weather condition information based on the information storing in the weather information storage, by the instruction from the weather information distinguishing controller, that is, the charging processor calculates the amount of commission that should be paid to each of the mobile communication terminals corresponding to the transmitting times of the weather condition information. And the weather information server provides a weather information receiver that receives the weather information basic data transmitted from the mobile switching exchanges (or routers) through the Internet, a weather information editing processor that makes weather information of specified areas by editing and processing the weather information basic data received from the weather information receiver, a database that stores the weather information edited and processed at the weather information editing processor, a weather information outputting controller that controls to extract some weather information from the database and to output the extracted weather information, and a weather information transmitter that transmits the extracted weather information based on an instruction from the weather information outputting controller. And the information delivery server provides a weather information receiver that receives weather information from the weather information server through the Internet, weather information storage that stores the weather information received at the weather information receiver, a request receiving section that receives weather information outputting requests from users, a weather information outputting controller that controls to extract some weather information from the weather information storage based on the requests from the users, and to output requested weather information, and a weather information transmitter that transmits the requested weather information to the users.

According to a sixth aspect of the present invention, there is provided a weather information delivery method. The weather information delivery method provides the steps of; inputting weather condition information showing a rain or fair condition of a spot where each of mobile communication terminals is positioned from each of the mobile communication terminals, which scatter in wide areas and are connected to the Internet, making the weather condition information a packet at each of the mobile communication terminals, transmitting the packet being the weather condition information from each of the mobile communication terminals to a mobile switching exchange (or router) through a base station to which each of the mobile communication terminals is connected, receiving the packet being the weather condition information at the mobile switching exchange (or router), receiving position information of each of the mobile communication terminals from the base station, and adding time information at the time when the weather condition information was received at the mobile switching exchange (or router), making weather condition basic data from the weather condition information and the position information and the time information at the mobile switching exchange (or router) as packets, transmitting the packets being the weather information basic data from the mobile switching exchange (or router) to a weather information server through the Internet, receiving the weather information basic data transmitted from the mobile switching exchange (or router) through the Internet at the weather information server, making weather information of specified areas by editing and processing the received weather information basic data at the weather information server, storing the weather information of specified areas in the weather information server and transmitting the weather information of specified areas to an information delivery server from the weather information server through the Internet, receiving the weather information of specified areas at the information delivery server, and storing the weather information of specified areas in the information delivery server, and selling the weather information of specified areas to users corresponding to requests from the users by transmitting through the Internet from the information delivery server.

According to a seventh aspect of the present invention, there is provided a weather information delivery method. The weather information delivery method provides the steps of; inputting weather condition information showing a rain or fair condition of a spot where each of mobile communication terminals is positioned from each of the mobile communication terminals, which scatter in wide areas and are connected to the Internet, making the weather condition information and position information of each of the mobile communication terminals obtained at a GPS receiver built in each of the mobile communication terminals a packet at each of the mobile communication terminals, transmitting the packet being the weather condition information with the position information from each of the mobile communication terminals to a mobile switching exchange (or router) through a base station to which each of the mobile communication terminals is connected, receiving the packet being the weather condition information with the position information at the mobile switching exchange (or router), adding time information at the time when the weather condition information with the position information was received at the mobile switching exchange (or router), making weather condition basic data from the weather condition information with the position information and the time information at the mobile switching exchange (or router) as packets, transmitting the packets being the weather information basic data from the mobile switching exchange (or router) to a weather information server through the Internet, receiving the weather information basic data transmitted from the mobile switching exchange (or router) through the Internet at the weather information server, making weather information of specified areas by editing and processing the received weather information basic data at the weather information server, storing the weather information of specified areas in the weather information server and transmitting the weather information of specified areas to an information delivery server, receiving the weather information of specified areas at the information delivery server, and storing the weather information of specified areas in the information delivery server, and selling the weather information of specified areas to users corresponding to requests from the users by transmitting through the Internet from the information delivery server.

According to an eighth aspect of the present invention, in the sixth and seventh aspects, each of the mobile communication terminals obtains the weather condition information by detecting the weather condition information by using a rain/fair sensor combined a temperature sensor and a humidity sensor, or by pushing one of designated keys allocated to rain and fair information. And the weather condition information is inputted by pushing one of designated keys allocated to rain, fair, cloud, and snow information at each of the mobile communication terminals, or in this, the snow information is included in the rain information instead of using an independent key for the snow information. And the weather condition information is transmitted right before a user of each of the mobile communication terminals calls to his/her destination, or after the user called to his/her destination, or by detecting the weather condition information from the sensor or only pushing one of the designated keys of each of the mobile communication terminals independently of calling to his/her destination.

According to a ninth aspect of the present invention, in the sixth and seventh aspects, owners of each of the mobile communication terminals supply the weather condition information to weather forecast companies from each of the mobile communication terminals, and receive commission for supplying the weather condition information, and the weather forecast companies collect and edit the weather condition information and supply the edited weather condition information to broadcasting companies and service providers, and receive payments from the broadcasting companies and the service providers, and the broadcasting companies use the weather information for their own weather forecast programs and the service providers receive payments from users who requested and received requested weather information from the service providers. And the commission to each of the mobile communication terminals for supplying the weather condition information is deposited in the bank account of each of the mobile communication terminals or is subtracted from the telephone charge for each of the mobile communication terminals. And a decision criterion is defined, in order to increase the commission for each of the mobile communication terminals for supplying the weather condition information. And the decision criterion includes a report from an area whose population density is low, a report at a designated time period, reports whose reporting times exceed designated times and whose accuracy is high.

According to a tenth aspect of the present invention, in the sixth and seventh aspect, the edited and processes weather condition information is transmitted back to each of the mobile communication terminals who transmitted the weather condition information.

According to an eleventh aspect of the present invention, there is provided a weather information delivery system. And in the weather information delivery system, mobile communication terminals, which scatter in wide areas and are connected to the Internet, output weather condition information showing the weather conditions of spots where the mobile communication terminals are positioned, the weather condition information of the spots outputted from the mobile communication terminals is collected and analyzed, and weather information of specified areas is made by editing and processing the collected and analyzed weather condition information, and the weather information of specified areas is sold to each of users who request weather information of some area through the Internet. With this, a weather information delivery system, in which users of a mobile communication terminals do not feel any burden and weather information such as a rain condition can be delivered to users who need some weather information at real time, can be established.

### BRIEF DESCRIPTION OF THE DRAWINGS

The objects and features of the present invention will become more apparent from the consideration of the following detailed description taken in conjunction with the accompanying drawings in which:
Fig. 1 is a block diagram showing a structure of a weather information delivery system at an embodiment of the present invention;
Fig. 2 is a block diagram showing a structure of a switching exchange at the embodiment of the weather information delivery system of the present invention;
Fig. 3 is a block diagram showing a structure of a weather information server at the embodiment of the weather information delivery system of the present invention;
Fig. 4 is a block diagram showing a structure of an information delivery server at the embodiment of the weather information delivery system of the present invention;
Fig. 5 is a flowchart showing the operation from a cellular phone transmits weather condition information to that the switching exchange transmits weather information basic data at the embodiment of the weather information delivery system of the present invention; and
Fig. 6 is a flowchart showing the operation from that the weather information server receives the weather information basic data (packets) to that the information deliver server transmits some weather information to users who request the weather information at the embodiment of the weather information delivery system of the present invention.

### DESCRIPTION OF THE PREFERRED EMBODIMENTS

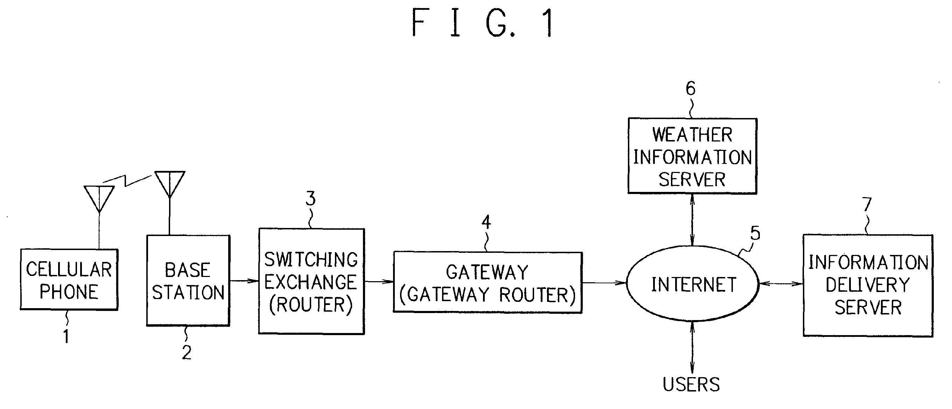

Referring now to the drawings, an embodiment of the present invention is explained in detail. Fig. 1 is a block diagram showing a structure of a weather information delivery system at the embodiment of the present invention. As shown in Fig. 1, the weather information delivery system at the embodiment of the present invention consists of a cellular phone 1, a base station 2, a switching exchange 3, a gateway 4, the Internet 5, a weather information server 6, and an information delivery server 7. In this, in order to make the explanation concise, the number of the cellular phone 1, the base station 2, the switching exchange 3, and the gateway 4 is made to be one each, however, actually the number of these units is plural.

As mentioned above, actually the number of the cellular phones 1 is plural, and many cellular phones 1 scatter in many areas. And the cellular phone 1 obtains weather condition information of a place where the cellular phone 1 is positioned by detecting automatically through a sensor or by pushing one of designated keys of the cellular phone 1 and outputs the weather condition information in the packet mode. In this, when the cellular phone 1 does not have the packet mode function, the weather condition information is outputted in the non-packet mode. The base station 2 receives the weather condition information from the cellular phone 1. The switching exchange 3 receives the weather condition information transmitted from the cellular phone 1 through the base station 2 and also receives position information of the cellular phone 1 from the base station 2, and adds time information at the received time of the weather condition information. And the switching exchange 3 makes weather information basic data by using the received weather condition information, the position information, and the time information, and further makes packets from the weather information basic data and transmits the packets to the gateway 4. The gateway 4 connects the switching exchange 3 to the Internet 5 by applying the protocol conversion of TCP/IP to the packets. The weather information server 6 receives the weather information basic data transmitted from the switching exchange 3 through the gateway 4 and the Internet 5, and makes weather information of specified areas by editing and processing the received weather information basic data. The information delivery server 7 receives the weather information of the specified areas edited and processed at the weather information server 6 and stores it, and outputs the weather information of the specified areas corresponding to requests from users. In this, the weather information server 6 and the information delivery server 7 can be made to be one unit.

The switching exchange 3 can be replaced by a router, and the gateway 4 can also be replaced by a gateway router, when these units can receive and transmit IP packets and control them. The position information can be obtained from a global positioning system (GPS) receiver built in the cellular phone 1, instead of from the base station 2. And also the detecting accuracy of the position information can be made to be high by using a method proposed by QUALCOMM Incorporated in which the GPS is used together with the information from the base station 2. The size of a specified area can be set to be both a narrow area and a wide area depending on types of service. As a narrow area example, Shibuya (town name) is specified, because a user wants to know that it is raining or not at Shibuya as the user is going to Shibuya from Yokohama (town name). And a wide area example, when a user wants to watch the moving state of a typhoon at real time, the rain region of the typhoon and the position of the center of the typhoon can be watched at real time by that the rain information is shown in the wide area.

The cellular phone 1 judges whether it rains or is fair by using a rain-fair sensor (not shown) combined a temperature sensor and a humidity sensor, and outputs the judged result as the weather condition information, and transmits an information packet being this weather condition information to a predetermined address (the weather information server 6) by pushing a predetermined designated transmitting key. Or the cellular phone 1 transmits the weather condition information by that the user pushes one of designated number keys being allocated for the weather information by not using the rain-fair sensor. The rain-fair sensor is built in the cellular phone 1 or attached to the cellular phone 1. Many cellular phones have a built-in temperature sensor for compensating the electric characteristics of the cellular phones, therefore, the rain-fair sensor can be made by combining a humidity sensor with this built-in temperature sensor. And in an alternative case, when the absolute humidity exceeds a designated value regardless of the temperature, it is judged that it is raining.

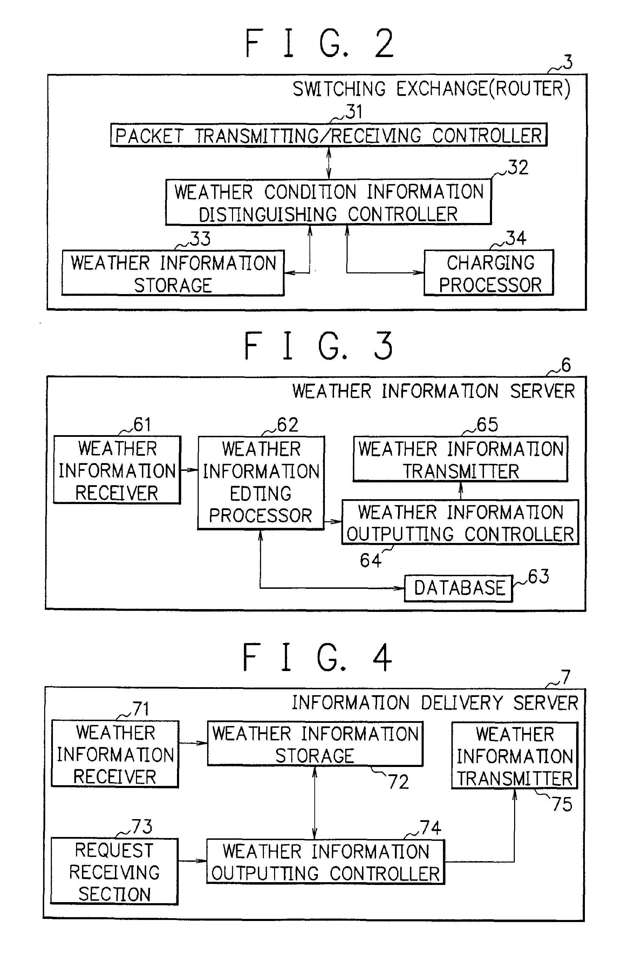

Fig. 2 is a block diagram showing a structure of the switching exchange 3 at the embodiment of the weather information delivery system of the present invention. As shown in Fig. 2, the switching exchange 3 provides a packet transmitting/receiving controller 31, a weather condition information distinguishing controller 32, weather information storage 33, and a charging processor 34. The packet transmitting/receiving controller 31 receives the weather condition information transmitted from the cellular phone 1 through the base station 2 and also receives position information of the cellular phone 1 from the base station 2, and adds time information at the received time of the weather condition information, and makes weather information basic data by using the received weather condition information, the position information, and the time information, and makes packets from the weather information basic data and transmits the packets to the gateway 4. The weather condition information distinguishing controller 32 distinguishes the weather condition information received at the packet transmitting/receiving controller, and also controls the weather information storage 33 and the charging processor 34. The weather information storage 33 stores the weather condition information distinguished at the weather information distinguishing controller 32 every transmitted cellular phone number. The charging processor 34 calculates the amount of money reducing from the charging amount for each cellular phone 1 by accumulating the number of times that each cellular phone 1 transmitted the weather condition information based on the information storing in the weather information storage 33, by the instruction from the weather information distinguishing controller 32. That is, the charging processor 34 calculates the amount of commission that should be paid to each cellular phone 1 corresponding to the transmitting times of the weather condition information.

At a circuit switching system composed of cellular phones and switching exchanges, basically, a user calls the weather information server 6 separately from calling to his/her destination. For example, the user calls the weather information server 6 by using a speed dialing after he/she finished calling his/her destination. As an actual example, the number " 1 " key means fair information + the speed dialing to the weather information server 6, and the number " 2 " key means rain information + the speed dialing to the weather information server 6. When the cellular phone 1 is in a state connecting to the Internet at the circuit switching system, the transmission of the weather condition information is completed by that the user pushes one of the designated number keys, like by that the user clicks a mouse on I-mode service of NTT DoCoMo. Therefore, the weather information delivery system of the present invention works at a cellular phone system in which the information is made to be packets by Internet protocol (IP). In this, the user can transmits only the weather condition information to the weather information server 6 not at the time before or after his/her calling to the destination by pushing a designated key of the cellular phone 1.

Fig. 3 is a block diagram showing a structure of the weather information server 6 at the embodiment of the weather information delivery system of the present invention. As shown in Fig. 3, the weather information server 6 provides a weather information receiver 61, a weather information editing processor 62, a database 63, a weather information outputting controller 64, and a weather information transmitter 65. The weather information receiver 61 receives the weather information basic data transmitted from the switching exchange 3 through the gateway 4 and the Internet 5. The weather information editing processor 62 makes weather information of specified areas by editing and processing the weather information basic data received from the weather information receiver 61. The database 63 stores the weather information edited and processed at the weather information editing processor 62. The weather information outputting controller 64 controls to extract some weather information from the database 63 and to output the extracted weather information. The weather information transmitter 65 transmits the extracted weather information based on an instruction from the weather information outputting controller 64.

There are several editing and processing methods for the weather information basic data at the weather information editing processor 62. As a simplest first method, the number of rain information per base station is shown by a bar graph (histogram) and/or a color shown like by the AMeDAS. As a second method, the number of rain information per base station is divided by the covering area of the base station, and the number of rain information per unit area (one square km) is shown by a bar graph (histogram) and/or a color shown like by the AMeDAS. And the high bar graph being the high value is judged as it is raining heavily. As a third method, the number of rain information per base station is divided by the population density in the covering area of the base station, and it is checked how many people in 100 persons report that it is raining, and when it is a light rain, the value becomes small. In this, the larger the population is, the larger the reports are transmitted, therefore, when the number of information (reports) is not divided by the population, the weather of a place of large population is always exaggerated. And as a fourth method, instead of the population density, the number of call traffic (calling persons including reporters) is used and normalized. At the third and fourth methods, the number of rain information is normalized by the population or the calling persons in the covering area of the base station 2, therefore, the universality of the data can be made to be high.

Fig. 4 is a block diagram showing a structure of the information delivery server 7 at the embodiment of the weather information delivery system of the present invention. As shown in Fig. 4, the information delivery server 7 provides a weather information receiver 71, weather information storage 72, a request receiving section 73, a weather information outputting controller 74, and a weather information transmitter 75. The weather information receiver 71 receives weather information from the weather information server 6 through the Internet 5. The weather information storage 72 stores the weather information received at the weather information receiver 71. The request receiving section 73 receives weather information outputting requests from users. The weather information outputting controller 74 controls to extract some weather information from the weather information storage 72 based on requests from users, and to output the requested weather information. The weather information transmitter 75 transmits the requested weather information to the users.

At the structure of the weather information delivery system mentioned above, owners of cellular phones contract with a weather forecast company and sell weather condition information to the weather forecast company and receives commission for transmitting the weather condition information. That is, the owners of the cellular phone receive information transmitting commission every month by only pushing a predetermined fair or rain key on their cellular phones before and after when they call their destinations. In this, the owners of the cellular phone can only transmit the weather condition information not at the time before and after when they call to their destinations. In other words, the more the owners of the cellular phone call, the more they receive the commission, and the income of both the owners and telephone company increases. The telephone charge transmitting the weather condition information is not paid by the owners of the cellular phone but by the weather forecast company. The weather forecast company gains sales by transmitting the weather information to broadcasting stations and service providers. The service providers gain sales by delivering the weather information to users who request the weather information. And also broadcasting companies can use the weather information obtained from the weather information delivery system for their own weather forecast.

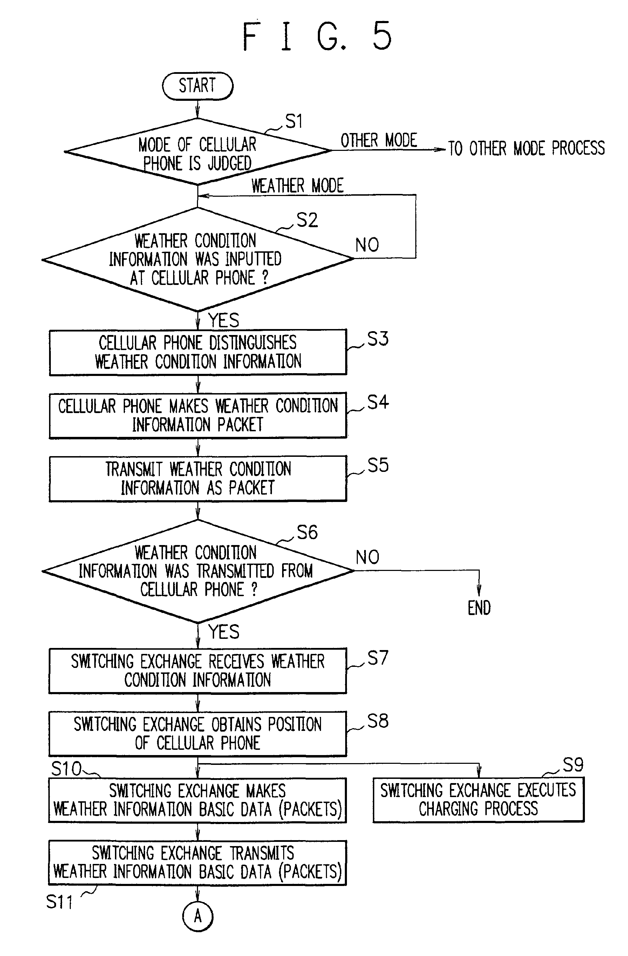

Fig. 5 is a flowchart showing the operation from that cellular phone 1 transmits the weather condition information to that the switching exchange 3 transmits the weather information basic data at the embodiment of the weather information delivery system of the present invention. Referring to Figs. 1 and 5, this operation is explained.

First, the mode of the cellular phone 1, which is capable of connecting to the Internet 5, is judged (step S1). When the cellular phone 1 is in the weather mode, it is judged whether weather condition information showing fair or rain was inputted to the cellular phone 1 or not (step S2). When the input of the weather condition information exists, the cellular phone 1 distinguishes this weather condition information (step S3), and the cellular phone 1 makes this weather condition information a packet (step S4), and transmits this packet to the switching exchange 3 through the base station 2 (step S5). The switching exchange 3 checks whether the weather condition information was transmitted from the cellular phone 1 or not (step S6), when the weather condition information was transmitted from the cellular phone 1, the switching exchange 3 receives the weather condition information (step S7). The switching exchange 3 obtains position information of the cellular phone 1 from the base station 2 (step S8). And also the switching exchange 3 executes a charging process to reduce the telephone charge for the cellular phone 1 that transmitted the weather condition information (step S9). The switching exchange 3 also makes weather information basic data by adding time information to the weather condition information and the position information of the cellular phone 1, and makes the weather information basic data packets (step S10). And the switching exchange 3 transmits the packets (weather information basic data) to the weather information server 6 through the gateway 4 and the Internet 5 (step S11).

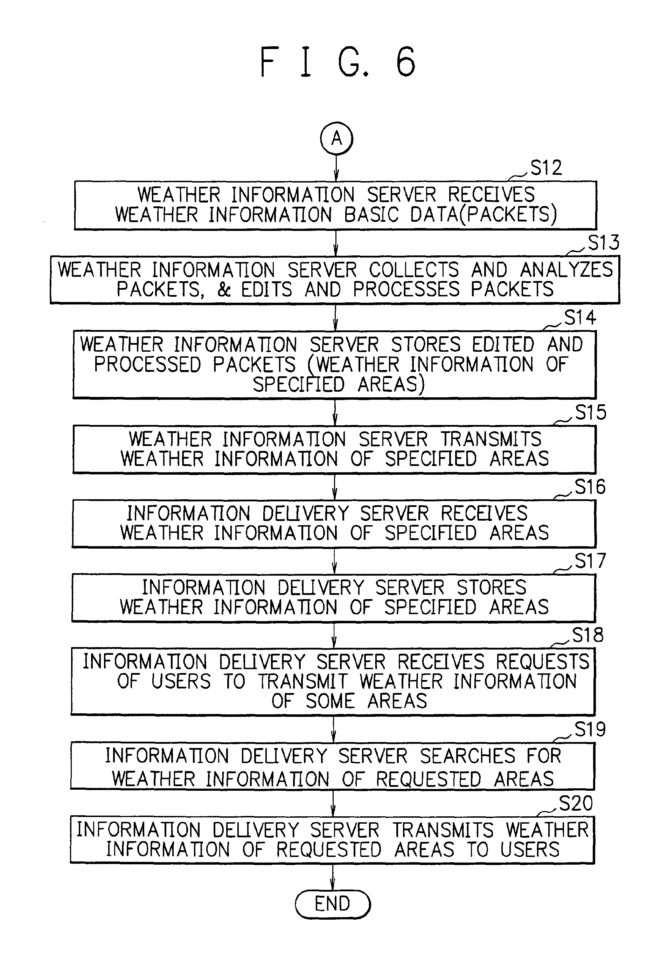

Fig. 6 is a flowchart showing the operation from that the weather information server 6 receives the weather information basic data (packets) to that the information deliver server 7 transmits some weather information to users who request the weather information at the embodiment of the weather information delivery system of the present invention. Referring to Figs. 1 and 6, this operation is explained.

The weather information server 6 receives the weather information basic data being the packets transmitted from the switching exchange 3 through the gateway 4 and the Internet 5 (step S12). And the weather information server 6 collects and analyzes the received weather information basic data from the plural cellular phones 1, and edits and processes the weather information basic data (step S13), and makes weather information of specified areas. The weather information server 6 stores the weather information of the specified areas in the database 63 in it (step S14). And the weather information server 6 transmits the weather information of the specified areas to the information delivery server 7 through the Internet 5 (step S15). The information delivery server 7 receives the weather information of the specified areas (step S16), and stores the weather information of the specified areas in the weather information storage 72 (step S17). The information delivery server 7 receives requests that users want to obtain weather information of some specified areas (step S18), and searches for the weather information of the specified area requested by each of the users (step S19), and sells the weather information of the specified area to each of the users (step S20).

At the explanation mentioned above, the weather condition information is made to be two kinds of fair and rain, and is obtained by the judged result of the fair/rain sensor built in or attached to the cellular phone 1, or by an input using one of predetermined number keys. The transmission of the weather condition information from the cellular phone 1 is executed by dialing just before calling to a destination, or after the calling, or by dialing directly to the weather information server 6 for only transmitting the weather condition information. In this, the weather condition information can be also transmitted to the weather information server 6 based on sequential polling operation from the switching exchange 3.

The commission for a reporter (informant) of the weather condition information is deposited in the bank account of the reporter being the owner of the cellular phone 1, or is subtracted from the telephone charge for the reporter. In order to increase the amount of the commission for the reporters, a decision criterion is defined. In this decision criterion, information transmitting from places whose population density is lower than a designated value, information transmitting at a designated time period, the number of reporting times, the accuracy of the reports, and so on are included. For example, when the number of reporting times is more than designated times and the reports are accurate, the amount of the commission becomes high. A good reporter frequently transmits the weather condition information and the accuracy of the reports is high, that is, there is no difference between the report from the good reporter and the reports transmitted from other reporters. In this case, the amount of the commission for the good reporter is made to be high. For example, the amount of information (number of reporting times), the quality (no false report), the valuable-ness (information from a place where people are a few) are used for weighting the report and some points are given to the good report by using this weighting. And reports whose evaluated points are low (false reports) are eliminated. The decision criterion and its decided result information are installed in the switching exchange 3 in which the charging information for the cellular phone 1 is stored, or in the weather information server 6, or the information delivery server 7.

It is possible that the weather condition information was edited and processed and after this the edited and processed weather information is transmitted back to the reporter being the owner of the cellular phone 1 without the request from the reporter. That is, when the reporter wants to have the weather information, the weather information (fair/rain information) of a place where the reporter designated can be displayed on the cellular phone 1 by free of charge or charged periodically or designated times. Or a raining map at real time is transmitted from the information delivery server 7 to the cellular phone 1, and the raining map is displayed on the display of the cellular phone 1. In this case, the user connects the cellular phone 1 to the Internet 5.

At the embodiment of the present invention, the cellular phone 1 is used as a mobile communication terminal, however, any mobile communication terminal can be used if the mobile communication terminal has a function that can communicate in the packet mode.

And at the explanation mentioned above, the cellular phone 1 transmits the weather condition information of only rain or fair information, however, the cellular phone 1 can transmit more weather condition information such as cloud information and snow information, the condition of wind, and so on by using designated keys of the cellular phone 1.

As mentioned above, according to the present invention, at the embodiment of the weather information delivery system of the present invention, more samples can be obtained compared with the AMeDAS, and also the weather information can be quickly obtained at real time with high accuracy. For example, generally, it not rains at the center of a typhoon, therefore the moving condition of the typhoon can be obtained at real time every moment, and this weather information becomes effective typhoon information. And the weather condition information is collected by using mobile communication terminals, therefore, the cost for establishing the system, especially, the initial investment can be saved largely. Furthermore, owners of the mobile communication terminal, telephone companies, weather forecast companies, and service providers have all sales, therefore the mobile communication business can have advantages from this weather delivery system.

While the present invention has been described with reference to the particular illustrative embodiment, it is not to be restricted by that embodiment but only by the appended claims. It is to be appreciated that those skilled in the art can change or modify the embodiment without departing from the scope of the present invention as defined in the claims.

## Claims

1. A weather information delivery system, wherein:
mobile communication terminals, which scatter in wide areas and are connected to the Internet, output weather condition information showing the weather conditions of spots where said mobile communication terminals are positioned,
said weather condition information of said spots outputted from said mobile communication terminals is collected and analyzed, and weather information of specified areas is made by editing and processing said collected and analyzed weather condition information, and
said weather information of specified areas is sold to each of users who request weather information of some area through the Internet.

2. A weather information delivery system, comprising:
mobile communication terminals, which scatter in wide areas and are connected to the Internet, for outputting weather condition information showing the weather conditions of spots where said mobile communication terminals are positioned as a packet mode by detecting said weather condition information automatically with a sensor or by inputting said weather condition information on one of designated keys of each of said mobile communication terminals;
mobile switching exchanges (or routers), which are connected to said mobile communication terminals through base stations, for outputting weather information basic data by receiving said weather condition information transmitted from said mobile communication terminals and position information of said mobile communication terminals from said base stations to which said mobile communication terminals are connected, and by adding time information at the time when said weather condition information was received; and
a weather information server for receiving said weather information basic data transmitted from said mobile switching exchanges (or routers) through the Internet, and for making weather information of specified areas by editing and processing said received weather information basic data.

3. A weather information delivery system, comprising:
mobile communication terminals, which scatter in wide areas and are connected to the Internet, for outputting weather condition information showing the weather conditions of spots where said mobile communication terminals are positioned by detecting said weather condition information automatically with a sensor or by inputting said weather condition information on one of designated keys of each of said mobile communication terminals, with position information of said mobile communication terminals by obtaining from a GPS receiver built-in each of said mobile communication terminals as a packet mode;
mobile switching exchanges (or routers), which are connected to said mobile communication terminals through base stations, for outputting weather information basic data by receiving said weather condition information with said position information transmitted from said mobile communication terminals and by adding time information at the time when said weather condition information was received; and
a weather information server for receiving said weather information basic data transmitted from said mobile switching exchanges (or routers) through the Internet, and for making weather information of specified areas by editing and processing said received weather information basic data.

4. A weather information delivery system in accordance with claim 2, further comprising:
an information delivery server for outputting weather information of some specified areas corresponding to requests from users, by receiving said weather information of specified areas from said weather information server and storing it.

5. A weather information delivery system in accordance with claim 3, further comprising:
an information delivery server for outputting weather information of some specified areas corresponding to requests from users, by receiving said weather information of specified areas from said weather information server and storing it.

6. A weather information delivery system in accordance with claim 2, wherein:
each of said mobile communication terminals outputs said weather condition information by detecting said weather condition information by using a rain/fair sensor combined a temperature sensor and a humidity sensor, or by pushing one of designated keys allocated to rain and fair information.

7. A weather information delivery system in accordance with claim 3, wherein:
each of said mobile communication terminals outputs said weather condition information by detecting said weather condition information by using a rain/fair sensor combined a temperature sensor and a humidity sensor, or by pushing one of designated keys allocated to rain and fair information.

8. A weather information delivery system in accordance with claim 6, wherein:
said rain/fair sensor is built in or attached to each of said mobile communication terminals.

9. A weather information delivery system in accordance with claim 7, wherein:
said rain/fair sensor is built in or attached to each of said mobile communication terminals.

10. A weather information delivery system in accordance with claim 2, wherein:
said weather condition information is inputted by pushing one of designated keys allocated to rain, fair, cloud, and snow information at each of said mobile communication terminals, or in this, said snow information is included in said rain information instead of using an independent key for said snow information.

11. A weather information delivery system in accordance with claim 3, wherein:
said weather condition information is inputted by pushing one of designated keys allocated to rain, fair, cloud, and snow information at each of said mobile communication terminals, or in this, said snow information is included in said rain information instead of using an independent key for said snow information.

12. A weather information delivery system in accordance with claim 2, wherein:
each of said mobile switching exchanges (or routers), comprising:
a packet transmitting/receiving controller that receives said weather condition information transmitted from said mobile communication terminals through said base stations and also receives the position information of said mobile communication terminals from said base stations, and adds the time information at the received time of the weather condition information, and makes said weather information basic data by using said received weather condition information, said position information, and said time information, and makes packets from said weather information basic data, and transmits said packets to a channel;
a weather condition information distinguishing controller that distinguishes said weather condition information received at said packet transmitting/receiving controller, and also controls to store said weather condition information and to process charging operation;
a weather information storage that stores said weather condition information distinguished at said weather information distinguishing controller every transmitted mobile communication terminal number; and
a charging processor that calculates the amount of money reducing from the charging amount for each of said mobile communication terminals by accumulating the number of times that each of said mobile communication terminals transmitted said weather condition information based on the information storing in said weather information storage, by the instruction from said weather information distinguishing controller, that is, said charging processor calculates the amount of commission that should be paid to each of said mobile communication terminals corresponding to the transmitting times of said weather condition information, and
said weather information server, comprising:
a weather information receiver that receives said weather information basic data transmitted from said mobile switching exchanges (or routers) through the Internet;
a weather information editing processor that makes weather information of specified areas by editing and processing said weather information basic data received from said weather information receiver;
a database that stores said weather information edited and processed at said weather information editing processor;
a weather information outputting controller that controls to extract some weather information from said database and to output said extracted weather information; and
a weather information transmitter that transmits said extracted weather information based on an instruction from said weather information outputting controller.

13. A weather information delivery system in accordance with claim 3, wherein:
each of said mobile switching exchanges (or routers), comprising:
a packet transmitting/receiving controller that receives said weather condition information and said position information obtained from said built-in said GPS receiver in each of said mobile communication terminals transmitted from each of said mobile communication terminals and adds the time information at the received time of said weather condition information, and makes said weather information basic data by using said received weather condition information, said position information, and said added time information, and makes packets from said weather information basic data, and transmits said packets to a channel;
a weather condition information distinguishing controller that distinguishes said weather condition information received at said packet transmitting/receiving controller, and also controls to store said weather condition information and to process charging operation;
a weather information storage that stores said weather condition information distinguished at said weather information distinguishing controller every transmitted mobile communication terminal number; and
a charging processor that calculates the amount of money reducing from the charging amount for each of said mobile communication terminals by accumulating the number of times that each of said mobile communication terminals transmitted said weather condition information based on the information storing in said weather information storage, by the instruction from said weather information distinguishing controller, that is, said charging processor calculates the amount of commission that should be paid to each of said mobile communication terminals corresponding to the transmitting times of said weather condition information, and
said weather information server, comprising:
a weather information receiver that receives said weather information basic data transmitted from said mobile switching exchanges (or routers) through the Internet;
a weather information editing processor that makes weather information of specified areas by editing and processing said weather information basic data received from said weather information receiver;
a database that stores said weather information edited and processed at said weather information editing processor;
a weather information outputting controller that controls to extract some weather information from said database and to output said extracted weather information; and
a weather information transmitter that transmits said extracted weather information based on an instruction from said weather information outputting controller.

14. A weather information delivery system in accordance with claim 4, wherein:
said information delivery server, comprising:
a weather information receiver that receives weather information from said weather information server through said Internet;
weather information storage that stores said weather information received at said weather information receiver;
a request receiving section that receives weather information outputting requests from users;
a weather information outputting controller that controls to extract some weather information from said weather information storage based on said requests from said users, and to output requested weather information; and
a weather information transmitter that transmits said requested weather information to said users.

15. A weather information delivery system in accordance with claim 5, wherein:
said information delivery server, comprising:
a weather information receiver that receives weather information from said weather information server through said Internet;
weather information storage that stores said weather information received at said weather information receiver;
a request receiving section that receives weather information outputting requests from users;
a weather information outputting controller that controls to extract some weather information from said weather information storage based on said requests from said users, and to output requested weather information; and
a weather information transmitter that transmits said requested weather information to said users.

16. A weather information delivery method, comprising the steps of:
inputting weather condition information showing a rain or fair condition of a spot where each of mobile communication terminals is positioned from each of said mobile communication terminals, which scatter in wide areas and are connected to the Internet;
making said weather condition information a packet at each of said mobile communication terminals;
transmitting said packet being said weather condition information from each of said mobile communication terminals to a mobile switching exchange (or router) through a base station to which each of said mobile communication terminals is connected;
receiving said packet being said weather condition information at said mobile switching exchange (or router);
receiving position information of each of said mobile communication terminals from said base station, and adding time information at the time when said weather condition information was received at said mobile switching exchange (or router);
making weather condition basic data from said weather condition information and said position information and said time information at said mobile switching exchange (or router) as packets;
transmitting said packets being said weather information basic data from said mobile switching exchange (or router) to a weather information server through the Internet;
receiving said weather information basic data transmitted from said mobile switching exchange (or router) through the Internet at said weather information server;
making weather information of specified areas by editing and processing said received weather information basic data at said weather information server;
storing said weather information of specified areas in said weather information server and transmitting said weather information of specified areas to an information delivery server from said weather information server through the Internet;
receiving said weather information of specified areas at said information delivery server, and storing said weather information of specified areas in said information delivery server; and
selling said weather information of specified areas to users corresponding to requests from said users by transmitting through the Internet from said information delivery server.

17. A weather information delivery method, comprising the steps of:
inputting weather condition information showing a rain or fair condition of a spot where each of mobile communication terminals is positioned from each of said mobile communication terminals, which scatter in wide areas and are connected to the Internet;
making said weather condition information and position information of each of said mobile communication terminals obtained at a GPS receiver built in each of said mobile communication terminals a packet at each of said mobile communication terminals;
transmitting said packet being said weather condition information with said position information from each of said mobile communication terminals to a mobile switching exchange (or router) through a base station to which each of said mobile communication terminals is connected;
receiving said packet being said weather condition information with said position information at said mobile switching exchange (or router);
adding time information at the time when said weather condition information with said position information was received at said mobile switching exchange (or router);
making weather condition basic data from said weather condition information with said position information and said time information at said mobile switching exchange (or router) as packets;
transmitting said packets being said weather information basic data from said mobile switching exchange (or router) to a weather information server through the Internet;
receiving said weather information basic data transmitted from said mobile switching exchange (or router) through the Internet at said weather information server;
making weather information of specified areas by editing and processing said received weather information basic data at said weather information server;
storing said weather information of specified areas in said weather information server and transmitting said weather information of specified areas to an information delivery server;
receiving said weather information of specified areas at said information delivery server, and storing said weather information of specified areas in said information delivery server; and
selling said weather information of specified areas to users corresponding to requests from said users by transmitting through the Internet from said information delivery server.

18. A weather information delivery method in accordance with claim 16, wherein:
each of said mobile communication terminals obtains said weather condition information by detecting said weather condition information by using a rain/fair sensor combined a temperature sensor and a humidity sensor, or by pushing one of designated keys allocated to rain and fair information.

19. A weather information delivery method in accordance with claim 17, wherein:
each of said mobile communication terminals obtains said weather condition information by detecting said weather condition information by using a rain/fair sensor combined a temperature sensor and a humidity sensor, or by pushing one of designated keys allocated to rain and fair information.

20. A weather information delivery method in accordance with claim 16, wherein:
said weather condition information is inputted by pushing one of designated keys allocated to rain, fair, cloud, and snow information at each of said mobile communication terminals, or in this, said snow information is included in said rain information instead of using an independent key for said snow information.

21. A weather information delivery method in accordance with claim 17, wherein:
said weather condition information is inputted by pushing one of designated keys allocated to rain, fair, cloud, and snow information at each of said mobile communication terminals, or in this, said snow information is included in said rain information instead of using an independent key for said snow information.

22. A weather information delivery method in accordance with claim 16, wherein:
said weather condition information is transmitted right before a user of each of said mobile communication terminals calls to his/her destination, or after said user called to his/her destination, or by detecting said weather condition information from said sensor or only pushing one of said designated keys of each of said mobile communication terminals independently of calling to his/her destination.

23. A weather information delivery method in accordance with claim 17, wherein:
said weather condition information is transmitted right before a user of each of said mobile communication terminals calls to his/her destination, or after said user called to his/her destination, or by detecting said weather condition information from said sensor or only pushing one of said designated keys of each of said mobile communication terminals independently of calling to his/her destination.

24. A weather information delivery method in accordance with claim 16, wherein:
owners of each of said mobile communication terminals supply said weather condition information to weather forecast companies from each of said mobile communication terminals, and receive commission for supplying said weather condition information, and
said weather forecast companies collect and edit said weather condition information and supply said edited weather condition information to broadcasting companies and service providers, and receive payments from said broadcasting companies and said service providers, and
said broadcasting companies use said weather information for their own weather forecast programs and said service providers receive payments from users who requested and received requested weather information from said service providers.

25. A weather information delivery method in accordance with claim 17, wherein:
owners of each of said mobile communication terminals supply said weather condition information to weather forecast companies from each of said mobile communication terminals, and receive commission for supplying said weather condition information, and
said weather forecast companies collect and edit said weather condition information and supply said edited weather condition information to broadcasting companies and service providers, and receive payments from said broadcasting companies and said service providers, and
said broadcasting companies use said weather information for their own weather forecast programs and said service providers receive payments from users who requested and received requested weather information from said service providers.

26. A weather information delivery method in accordance with claim 24, wherein:
said commission to each of said mobile communication terminals for supplying said weather condition information is deposited in the bank account of each of said mobile communication terminals or is subtracted from the telephone charge for each of said mobile communication terminals.

27. A weather information delivery method in accordance with claim 25, wherein:
said commission to each of said mobile communication terminals for supplying said weather condition information is deposited in the bank account of each of said mobile communication terminals or is subtracted from the telephone charge for each of said mobile communication terminals.

28. A weather information delivery method in accordance with claim 26, wherein:
a decision criterion is defined, in order to increase said commission for each of said mobile communication terminals for supplying said weather condition information.

29. A weather information delivery method in accordance with claim 27, wherein:
a decision criterion is defined, in order to increase said commission for each of said mobile communication terminals for supplying said weather condition information.

30. A weather information delivery method in accordance with claim 28, wherein:
said decision criterion includes a report from an area whose population density is low, a report at a designated time period, reports whose reporting times exceed designated times and whose accuracy is high.

31. A weather information delivery method in accordance with claim 29, wherein:
said decision criterion includes a report from an area whose population density is low, a report at a designated time period, reports whose reporting times exceed designated times and whose accuracy is high.

32. A weather information delivery method in accordance with claim 16, wherein:
said edited and processes weather condition information is transmitted back to each of said mobile communication terminals who transmitted said weather condition information.

33. A weather information delivery method in accordance with claim 17, wherein:
said edited and processes weather condition information is transmitted back to each of said mobile communication terminals who transmitted said weather condition information.
